# EUROPÄISCHE PATENTANMELDUNG

(11) **EP 4 235 991 A1**
(43) Veröffentlichungstag der Anmeldung: **30.08.2023**
(21) Anmeldenummer: 23158733.8
(22) Anmeldetag: 27.02.2023
(51) Int. Cl.: H02G 3/08, H02G 3/12

(54) **HOHLWANDDOSE**

(30) Priorität: 28.02.2022 DE 102022104737
(71) Anmelder: Kaiser GmbH & Co. KG, 58579 Schalksmühle (DE); Agro AG, 5502 Hunzenschwil (CH)
(72) Erfinder: SIEBEKING, Thomas, 58513 Lüdenscheid (DE); MEIER, Niklaus, 5742 Kölliken (CH)
(74) Vertreter: Rentsch Partner AG

(57) **Zusammenfassung**

Die Erfindung bezieht sich auf eine Hohlwanddose (1) für elektrotechnische Zwecke umfassend einen Dosenkörper (2) aufweisend einen Dosenboden (3) und eine in diesen übergehende Dosenwand (4), welche einen Installationsraum (5) umgeben. Der Dosenkörper (2) kann einerseits mindestens eine Dosenöffnung umfassen, welche durch eine Membran (7) aus weichelastischem Material verschlossen ist. Die Membran (7) umfasst eine röhrenförmige Manschette (8), welche sich in eine Längsrichtung der Manschette (8) von einem proximalen Ende (11) zu einem distalen Ende (12) erstreckt und eine zumindest bereichsweise heraustrennbare innere Zone (9) der Membran (7) umgibt. Die Erfindung bezieht sich andererseits ebenfalls auf eine Hohlwanddose mit einem von der Dosenwand (4) seitlich abragenden und die Installationsöffnung (6) umgebenen Kragen (15), der zumindest bereichsweise aus einem weichelastischen Material besteht.

## Beschreibung

Die Erfindung betrifft eine Hohlwanddose für elektrotechnische Zwecke, insbesondere zur Aufnahme von elektrischen Teilen wie Schaltern, Steckdosen, Lampen oder ähnliches.

Um elektrische Schalter, Steckdosen, Lampen, Apparate, etc. an den dazu vorgesehenen Stellen in einem Gebäude eines Bauwerkes anbringen zu können, werden unter anderem Hohlwanddosen verwendet. Aus dem Stand der Technik sind eine Vielzahl von Hohlwanddosen bekannt, welche in eine Wandöffnung einer Wand einsetzbar und welche durch an der Wand angreifende Befestigungsmittel gesichert sind.

In der Regel besteht das Befestigungsmittel aus einer Befestigungslasche und einer die Befestigungslasche gewindemässig durchgreifenden Stellschraube die entlang einer Dosenwand verläuft. Diese Befestigungslasche ist mittels der Stellschraube verstellbar und entlang eines Aussengewindes der Stellschraube bewegbar. Vor der Montage ist die Befestigungslasche normalerweise in eine an der Aussenseite der Hohlwanddose angeordnete Ausnehmung eingeschwenkt, d.h. sie steht aus der Dosenwand nicht vor. Nach dem Einsetzen der Hohlwanddose wird die Stellschraube von einer Installationsöffnung der Hohlwanddose her betätigt, wodurch die Befestigungslasche ausgeschwenkt und sich entlang der Stellschraube in Richtung der Installationsöffnung bewegt. In der Endposition greift die Befestigungslasche in eine Rückseite der Hohlwand ein.

Bei in Hohlwänden verbauten Hohlwanddosen ergibt sich die bekannte Problematik, dass sich ein Luftzug durch die Hohlwanddose, respektive durch die Hohlwand, ausbreiten kann. Die Luft kann durch die Installationsöffnung der Hohlwanddose in diese hineintreten, von dort durch weitere Dosenöffnungen in die Hohlwand gelangen und aus dieser z.B. in einen benachbarten Raum wieder heraustreten.

Aus dem Stand der Technik sind daher luftdichte Hohlwanddosen bekannt, bei denen die Dosenöffnungen im Auslieferungszustand mit je einer Membran aus weichelastischem Material überspannt sind, welche die jeweiligen Dosenöffnungen dichtend verschliessen. Während der Installation werden eine oder mehrere Membranen zumindest bereichsweise geöffnet, z.B. mit einem Werkzeug durchstossen, um ein Installationsrohr in den Installationsraum einzuführen. Ein Beispiel einer derartigen Hohlwanddose ist die EP3540885A1 derselben Anmelderin. Die darin offenbarte Hohlwanddose weist einen Dosenkörper mit einer Dosenöffnung zum Einführen eines Installationsrohrs auf, welche durch eine elastische Membran überspannt ist. Die elastische Membran weist zumindest eine äussere Zone und eine von der äusseren Zone umgebene, heraustrennbare innere Zone auf. Der Aufbau dieser Membran erlaubt eine richtungsflexible und luftdichte Aufnahme von einem Installationsrohr durch eine von der inneren Zone freigegebenen Einführöffnung.

Für Anwendungen in Feuchträumen (z.B. Badezimmern) oder Reinräumen sind jedoch erhöhe Anforderungen an die fluidische Dichtheit (dicht in Hinblick auf Gase und/oder Flüssigkeiten) der Hohlwanddosen gegeben. Um diesen Anforderungen zu genügen, müssen herkömmliche luftdichte Hohlwanddosen aufwendig von einem Monteur von aussen abgedichtet werden.

Eine Aufgabe der Erfindung besteht darin eine Hohlwanddose mit einer verbesserten Dichtigkeit bereitzustellen.

Die Hohlwanddose gemäss der Erfindung dient für elektrotechnische Zwecke und umfasst einen Dosenkörper aufweisend einen Dosenboden und eine Dosenwand. Die Dosenwand kann hierbei röhrenförmig sein. D.h. ein Querschnitt der Dosenwand kann sich in Richtung einer Mittelachse des Dosenkörpers verändern. Der jeweilige Querschnitt kann hierbei rund, eckig, oval oder ähnlich ausgestaltet sein. Die Dosenwand geht in den Dosenboden über und beide umgeben einen Installationsraum, der durch eine dem Dosenboden gegenüberliegende Installationsöffnung zugänglich ist. Der Installationsraum dient zur Aufnahme mindestens einer Elektroinstallation.

Je nach Ausführung kann der Dosenkörper mindestens eine Dosenöffnung umfassen, welche durch eine Membran aus weichelastischem Material verschlossen ist. Die mindestens eine Dosenöffnung kann sich über den Dosenboden und/oder die Dosenwand und/oder (wenn vorhanden) einen Übergangsbereich zwischen den Dosenboden und der Dosenwand erstrecken. Der Übergangsbereich kann abgerundet und/oder abgeflacht ausgestaltet sein. In der Membran kann eine zumindest bereichsweise heraustrennbare innere Zone der Membran angeordnet sein, welche in einem herausgetrennten Zustand eine Einführöffnung zum Einführen einer Leitung (z.B. Elektroinstallationsrohr, elektrische und/oder optische Leitung, etc.) freigibt. Mit Vorteil umfasst die Membran ferner eine röhrenförmige Manschette zum Abdichten, insbesondere fluidischen Abdichten, eines in die Manschette eingeführten Rohres. Die Manschette erstreckt sich in eine Längsrichtung der Manschette von einem proximalen Ende zu einem distalen Ende der Manschette. Die röhrenförmige Manschette ist hierbei derart ausgelegt, dass diese sich an ein durch die Manschette eingeführtes Rohr dichtend, insbesondere fluidisch dichtend, anlegt. Die Manschette umgibt hierbei die zumindest bereichsweise heraustrennbare innere Zone der Membran, respektive die Einführöffnung in dem herausgetrennten Zustand der inneren Zone. Die heraustrennbare innere Zone ermöglicht, dass die Hohlwanddose auch in einem initialen Zustand, d.h. vor dem Heraustrennen der inneren Zone, dichtend, insbesondere fluidisch dichtend, ausgestaltet ist.

Die innere Zone der Membran ist mit Vorzug an dem kleinsten Querschnitt der Manschette angeordnet. Dies ist in der Regel am distalen Ende der Manschette. Jedoch sind auch andere Anordnungen, wie z.B. am proximalen Ende oder zwischen dem proximalen und distalen Ende denkbar. Die innere Zone kann weiter an die Manschette angeformt sein. Für eine einfache Heraustrennung kann zumindest bereichsweise zwischen der Manschette und der inneren Zone eine Dünnstelle angeordnet ein. Mit Vorteil ist die Dünnstelle um die innere Zone umlaufend.

Die Manschette ist hierbei mit Vorzug umstülpbar, insbesondere von einem Doseninneren (respektive dem Installationsraum) zu einem Dosenäusseren. D.h. die Manschette kann von einer ersten Position, in der die Manschette in dem Installationsraum (Doseninneren) angeordnet ist, in eine zweite Position, in der die Manschette vom Dosenkörper nach aussen abragt (Dosenäusseren), umstülpbar sein. Hierbei kann die erste und/oder die zweite Position der Manschette eigenstabil sein. Für ein einfaches Einführen eines Installationsrohres ist die Manschette in einem initialen Zustand in der ersten Position. Zum Einführen des Installationsrohres durch die Manschette kann das Installationsrohr dann einfach von aussen durch die Manschette gesteckt werden. Nach dem Einführen des Rohres kann an dem Installationsrohr von aussen gezogen werden. Die Manschette ist mit Vorzug derart ausgelegt, dass bei der Verschiebung des durch die Manschette eingeführten Installationsrohres in Längsrichtung des Installationsrohres, sich die Manschette bei einer ausreichend grossen Verschiebung vom Installationsraum zum Dosenäusseren umstülpt (oder vice versa). Auf diese Weise können beispielsweise Versätze in der Länge des Installationsrohres ausgeglichen werden. Ferner dient die Manschette als Zugentlastung. Ebenfalls ermöglicht das Umstülpen der Manschette, dass das Installationsrohr ausserhalb einer Kontur des Dosenkörpers endet und dennoch dicht an der Hohlwanddose angebracht ist. Der Installationsraum der Hohlwanddose ist somit frei zugänglich und die Montage der Elektroinstallation wird vereinfacht.

Je nach Ausführung kann die Dicke der Membran variieren. Beispielsweise kann die innere Zone eine geringere Membrandicke aufweisen als die Manschette. Auch kann die Membrandicke über die Längsrichtung der Manschette variieren. Dies kann beispielsweise für die Ausbildung mindestens einer eigenstabilen Position genutzt werden.

Je nach Ausführung kann sich ein Querschnitt der röhrenförmigen Manschette in der Längsrichtung der Manschette verringern. Unter röhrenförmig wird verstanden, dass der Querschnitt unterschiedliche Formen (z.B. rund, elliptisch, eckig, etc.) haben kann, die sich über die Längsrichtung der Manschette verändern können. Mit Vorteil ist eine Innenkontur der Manschette jedoch zumindest bereichsweise konisch und/oder zumindest bereichsweise zylindrisch ausgestaltet. Beispielsweise kann die Manschette in Längsrichtung trichterförmig ausgestaltet sein. Hierzu kann die Innenkontur der Manschette an dem proximalen Ende konisch ausgestaltet sein während die die Innenkontur der Manschette an dem distalen Ende zylindrisch ausgestaltet ist.

Die Geometrie der Manschette kann u.a. durch eine Länge A der Manschette in Längsrichtung (von dem proximalen zum distalen Ende) und einen minimalen Durchmesser D beschrieben werden. Je nach Ausführung kann hierbei das Verhältnis von A/D 1,5 bis 2 sein. Mit Vorteil weist die Manschette einen zylindrischen Dichtabschnitt auf, welcher einen runden Querschnitt aufweist. Ein zylindrischer Dichtabschnitt der Manschette mit einer Länge von L = 5 - 15mm in Längsrichtung der Manschette ist vorteilhaft für die Abdichtung eines Installationsrohres mit Wellenbergen und Wellentälern. Eine gute Abdichtung von verschiedenen handelsüblichen Installationsrohrdurchmessern wird erzieht, wenn die Manschette über eine Länge von L = 10 mm einen geringeren Durchmesser als D = 20mm aufweist.

Weiterhin kann der Manschette ein Winkel W zwischen einer Mittelachse der Manschette und einer Mittelachse der Dosenwand zugewiesen werden. Für eine möglichst richtungsflexible Zuführung von Installationsrohren liegt der Winkel W vorteilhafterweise zwischen 0° bis 90°, insbesondere zwischen 40° - 50°. Bei einem Winkel von 0° und dem Fall, dass die Manschette in den Installationsraum hineinragt (erste Position), zeigt das distale Ende der Manschette hierbei zur Installationsöffnung hin.

Je nach Ausführung kann die Manschette zudem von einer äusseren Zone der Membran umgeben sein. Diese unterstützt die Richtungsflexibilität eines zugeführten Installationsrohres. Die Manschette kann an dem proximalen Ende in die äussere Zone der Membran übergehen. Die äussere Zone verbindet hierbei die Manschette mit einem Rand der Dosenöffnung des Dosenkörpers. Wenn eine äussere Zone vorhanden ist, folgt diese mit Vorteil im Wesentlichen der Kontur des Dosenkörpers. Grundsätzlich kann die Membran an den Rand der Dosenöffnung angeformt sein. Demnach kann bei einer Ausgestaltung mit äusserer Zone diese an den Rand der Dosenöffnung angeformt sein. Ebenfalls denkbar ist jedoch auch, dass die Manschette an dem proximalen Ende direkt an den Rand angebracht, insbesondere angeformt, ist.

Um das Heraustrennen der inneren Zone weiter zu vereinfachen, kann an dieser zudem eine Abreisslasche angeordnet sein. Je nach Ausführung kann die Abreisslasche auf einer zum Installationsraum hinweisenden ersten Seite der inneren Zone und/oder auf einer vom Installationsraum wegweisenden zweiten Seite der inneren Zone angeordnet sein. Mit Vorteil ist die Abreisslasche in einer eigenstabilen Position der Manschette derart angeordnet, dass diese von einem Monteur gut greifbar ist. D.h. wenn die erste Position eigenstabil ist, ist die Abreisslasche auf der ersten Seite angeordnet und/oder wenn die zweite Position eigenstabil ist, ist die Abreisslasche auf der zweiten Seite angeordnet. Ebenfalls können auch auf beiden Seiten der inneren Zone Abreisslaschen angeordnet sein.

Für eine stabile Auflage an der Hohlwand kann der Dosenkörper einen an die Dosenwand angrenzenden ringförmigen Rand umfassen. Der Rand umfasst mit Vorteil dasselbe Material wie der Dosenkörper. Der Dosenkörper kann hierbei aus einem Hartplastik bestehen. Für eine verbesserte Abdichtung kann eine Rückseite des Randes zudem mit einer Schicht aus einem weichelastischen Material (insbesondere dem weichelastischen Material der Membran) überzogen sein. Ebenfalls ist es denkbar, dass sich diese Schicht von der Rückseite des Randes auf einen Bereich auf Dosenwand erstreckt, welcher an den Rand angrenzt. Auf diese Weise kann die Hohlwanddose ebenfalls zur Wandöffnung der Hohlwand hin abgedichtet werden. Die Rückseite des Randes ist hierbei zum Dosenboden hingewandt.

Je nach Ausführung der Hohlwanddose kann diese einen von dem Dosenkörper seitlich abragenden und die Installationsöffnung umgebenen Kragen aufweisen, der zumindest bereichsweise aus einem weichelastischen Material besteht (insbesondere dem weichelastischen Material der Membran). Der Kragen kann von der Dosenwand abragen und/oder von dem Rand des Dosenkörpers radial nach aussen abragen. Der Kragen aus weichelastischem Material dichtet hierbei die Wandöffnung gegen die in der Wandöffnung sitzende Hohlwanddose ab, insbesondere wasserdicht ab. Der Kragen ist hierbei mit Vorteil dünnwandig und/oder elastisch. Der Kragen kann weiterhin eine strukturierte erste und/oder zweite Seite aufweisen. Die erste Seite zeigt hierbei zum Dosenboden hin, während die zweite Seite von dem Dosenboden wegzeigt. Eine strukturiere erste Seite kann somit die Dichtigkeit zwischen der Hohlwand und der Hohlwanddose verbessern, während eine strukturiere zweite Seite die Anbindung von Putz oder Dichtfolien auf der Hohlwanddose vereinfacht.

Eine von der Dosenwand in eine radiale Richtung gemessene Kragenbreite entspricht mit Vorteil mindestens 70%, insbesondere 70 - 100% des Durchmessers eines Kompartimentes der Hohlwanddose (d.h. falls ein Rand wie oben beschrieben vorhanden ist, ist dieser in der Kragenbreite mit bemessen). Ein Kompartiment dient zum Aufnehmen von je einer Elektroinstallation. Je nach Ausführung der Hohlwanddose kann der Installationsraum ein, zwei oder mehrere Kompartimente umfassen. Ein Kompartiment hat in der Regel einen Durchmesser von D = 68mm. D.h. die Kragenbreite kann zwischen 48mm und 68 mm liegen. Wenn die Hohlwanddose lediglich ein Kompartiment aufweist, entspricht der Durchmesser des Kompartimentes dem Durchmesser der Installationsöffnung.

Im Fall, dass ein Rand vorhanden ist, erstreckt sich der Kragen mit Vorteil von der Dosenwand entlang der Rückseite des Randes und von Rand aus weiter radial nach aussen. Mit Vorteil ist jedoch eine Dosenfrontseite der Dose, welche aus dem Rand und/oder dem Kragen gebildet wird, stufenlos. Die Dosenfrontseite ist hierbei die Seite der Dose, welche von dem Dosenboden wegzeigt. D.h. der Kragen kann sowohl an der Rückseite des Randes als auch an einer radial aussenliegenden Kante des Randes angeformt sein. Oder in anderen Worten: Der Rand kann derart im Kragen eingebettet sein, sodass der Kragen und der Rand gemeinsam (insbesondere stufenlos) die Dosenfrontseite ausbilden.

Der Kragen ist hierbei für Anwendungen vorteilhaft, bei denen die Hohlwanddose z.B. unterhalb von Fliesen angeordnet ist und erhöhte Dichtigkeitsanforderungen von der Vorderseite der Wand erfüllt sein müssen. Die Hohlwanddose kann mit Kragen und Rohreinführungen mit Manschette (wie zuvor beschrieben) verwendet werden. Jedoch sind ebenfalls Ausführungen der Hohlwanddose denkbar, welche einen Kragen mit einer andersartigen Rohreinführung vorsieht. Beispielsweise sind Ausführungen denkbar, bei der die mindestens eine Dosenöffnung durch die (oben beschriebene) Membran aus weichelastischem Material verschlossen ist, welche zusätzlich eine um die innere Zone umlaufende Wulst umfasst. Die Wulst kann sich dichtend in ein Wellental eines Elektroinstallationsrohres anschmiegen. Somit erfüllen auch Ausgestaltungen mit Kragen und ohne Manschette die oben angeführte Aufgabe der Erfindung. Der Vorteil einer Manschette ist jedoch, dass diese eine verbesserte Fehlertoleranz in Bezug auf den Durchmesser des einzuführenden Elektroinstallationsrohres aufweist. Andersrum können für bestimmte Anwendungen ebenfalls Ausführungen ohne Kragen jedoch mit Manschette vorteilhaft sein. Dies ist z.B. bei Wänden mit Metalloberfläche der Fall, welche häufig bei Reinrauminstallationen oder in Laboren vorgesehen sind. Bei derartigen Anwendungen kann es ausreichend sein z.B. die Rückseite des Randes mit der Schicht aus dem weichelastischen Material zu überziehen, wie vorher beschrieben (und auf den Kragen zu verzichten).

Je nach Ausführung der Hohlwanddose kann diese in der Dosenwand eine Adapteröffnung zum Einführen eines Adapters für das Verbinden der Hohlwanddose mit einer weiteren Hohlwanddose aufweisen. Um diese Verbindung dicht, insbesondere wasserdicht, zu gestalten, kann die Adapteröffnung entlang einer Innenfläche der Adapteröffnung zumindest bereichsweise eine Schicht aus dem weichelastischen Material aufweisen.

Für die Anbringung der Hohlwanddose in einer Hohlwand kann diese mindestens eine Stellschraube und eine Befestigungslasche pro Stellschraube aufweisen. Mit Vorteil sind jedoch zwei im Bezug zur Mittelachse der Hohlwanddose gegenüberliegende Stellschrauben vorhanden mit je einer Befestigungslasche pro Stellschraube. Die jeweilige Befestigungslasche steht hierbei mit der entsprechenden Stellschraube in Eingriff, sodass die Befestigungslasche durch Drehen der Stellschraube in einer ersten Drehrichtung entlang der Stellschraube und in einem sich zumindest bereichsweise entlang einer Aussenseite der Dosenwand in die axiale Richtung erstreckenden Führungskanal bewegbar ist. Die Stellschraube kann hierbei von der Installationsöffnung her betätigt werden (drehen in die erste oder eine gegenläufige zweite Drehrichtung). Die Stellschaube erstreckt sich daher von einer Dosenfrontseite zu einer Dosenrückseite durch eine Befestigungsöffnung des Dosenkörpers. Hierbei zeigt die Installationsöffnung zur Dosenfrontseite. In den meisten Fällen ist die Befestigungsöffnung im Bereich der Installationsöffnung angeordnet. Für eine fluidische Abdichtung der Befestigungsöffnung ist es daher sinnvoll, wenn ebenfalls die Befestigungsöffnung entlang einer Innenfläche der Befestigungsöffnung zumindest bereichsweise eine Schicht aus dem weichelastischen Material aufweisen. Alternativ oder ergänzend kann ebenfalls eine frontale Auflagefläche für den Kopf der Stellschraube, und/oder eine rückseitige Anschlagsfläche für die Befestigungslasche von einer ringförmigen Schicht aus dem weichelastischen Material bedeckt sein. Mit Vorteil sind alle drei Schichten (an der Innenfläche der Befestigungsöffnung, an der Auflagefläche und der Anschlagsfläche) integral geformt.

Je nach Ausführung der Hohlwanddose kann diese zumindest teilweise in einem Spritzgussverfahren hergestellt werden. Hierzu können das Material des Dosenkörpers und/oder das weichelastische Material Spritzgusskomponenten sein. Mit Vorteil ist daher die Hohlwanddose integral ausgestaltet. Hierzu kann diese also ein Zwei-Komponenten-Spritzgussbauteil sein, respektive wird diese in einem Zwei-Komponenten-Spritzgussverfahren hergestellt.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Hohlwanddose gemäss der Erfindung in einer perspektivischen Ansicht;
- Fig. 2: Die Hohlwanddose gemäss Figur 1 in einer Ansicht von hinten;
- Fig. 3: Die erste Variante der Hohlwanddose in der Schnittansicht A - A gemäss Figur 2;
- Fig. 4: Die erste Variante der Hohlwanddose in einer perspektivischen Ansicht und teilweise geschnitten;
- Fig. 5: Detail B aus Figur 4;
- Fig. 6: Eine zweite Variante einer Hohlwanddose gemäss der Erfindung in einer perspektivischen Ansicht und teilweise geschnitten;
- Fig. 7: Die Hohlwanddose gemäss Figur 6 in einer Ansicht von der Seite.

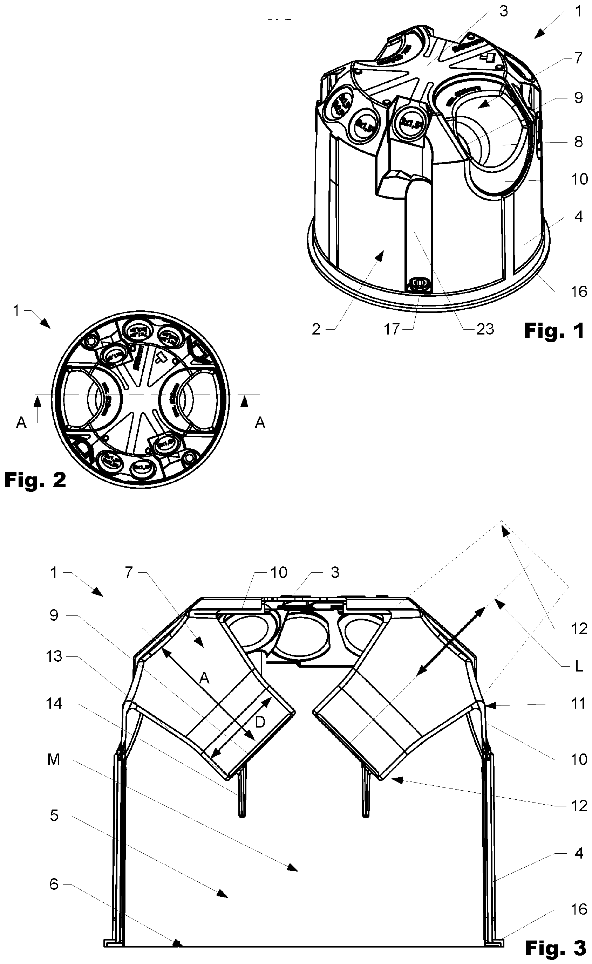

**Figur 1** bis **Figur 5** zeigen eine erste Variante einer Hohlwanddose 1 für elektrotechnische Zwecke. Die Hohlwanddose 1 umfasst einen Dosenkörper 2 mit einem Dosenboden 3 und einer in diesen übergehenden Dosenwand 4, welche einen Installationsraum 5 umgeben. Der Installationsraum 5 ist durch eine dem Dosenboden 3 gegenüberliegende Installationsöffnung 6 zugänglich. Der Dosenkörper 2 umfasst mindestens eine Dosenöffnung, welche durch eine Membran 7 aus weichelastischem Material verschlossen ist.

Die Membran 7 umfasst weiter eine röhrenförmige Manschette 8, welche sich in eine Längsrichtung L der Manschette 8 von einem proximalen Ende 11 zu einem distalen Ende 12 erstreckt. Die Manschette 8 umgibt eine zumindest bereichsweise heraustrennbare innere Zone 9 der Membran 7. Die Manschette 8 kann direkt an einen Rand der Dosenöffnung des Dosenkörpers 2 angeformt sein oder die Membran 7 kann, wie dargestellt, eine äussere Zone 10 aufweisen, welche die Manschette 8 mit dem Rand der Dosenöffnung verbindet. Die innere und/oder die äussere Zone 9, 10 können an der Manschette 8 angeformt sein. Vorzugsweise ist jedoch zwischen der Manschette 8 und der inneren Zone 9 eine Dünnstelle 13 angeordnet. Um das Heraustrennen weiter zu vereinfachen, kann die innere Zone 9 optional eine Abreisslasche 14 aufweisen.

In **Figur 3** ist die Manschette 8 in einer ersten eigenstabilen Position zu erkennen, in der die Manschette 8 in dem Installationsraum 5 angeordnet ist, bzw. in diesen hineinragt. Jedoch kann die Manschette 8 ebenfalls durch Umstülpen in eine zweite Position gebracht werden, in der die Manschette 8 vom Dosenkörper 2 nach aussen abragt (gestrichelt dargestellt). In der dargestellten ersten Position ist die Manschette 8, respektive die Längsachse L der Manschette 8 in einem Winkel von im Wesentlichen 45° zur Mittelachse M des Dosenkörpers 2 angeordnet. Vorzugsweise weist die Manschette 8, wie gezeigt, einen sich in Längsrichtung L der Manschette 8, d.h. von dem proximalen zum distalen Ende 11, 12 der Manschette 8, verringernden Querschnitt 8 auf. Im gezeigten Fall ist hierbei eine Innenkontur der Manschette 8 im Bereich des proximalen Endes 11 konisch und im Bereich des distalen Endes 12 zylindrisch ausgestaltet. Das Verhältnis der Länge der Manschette zu dem minimalen Durchmesser D am zylindrischen Abschnitt liegt zwischen A/D = 1,5 bis 2.

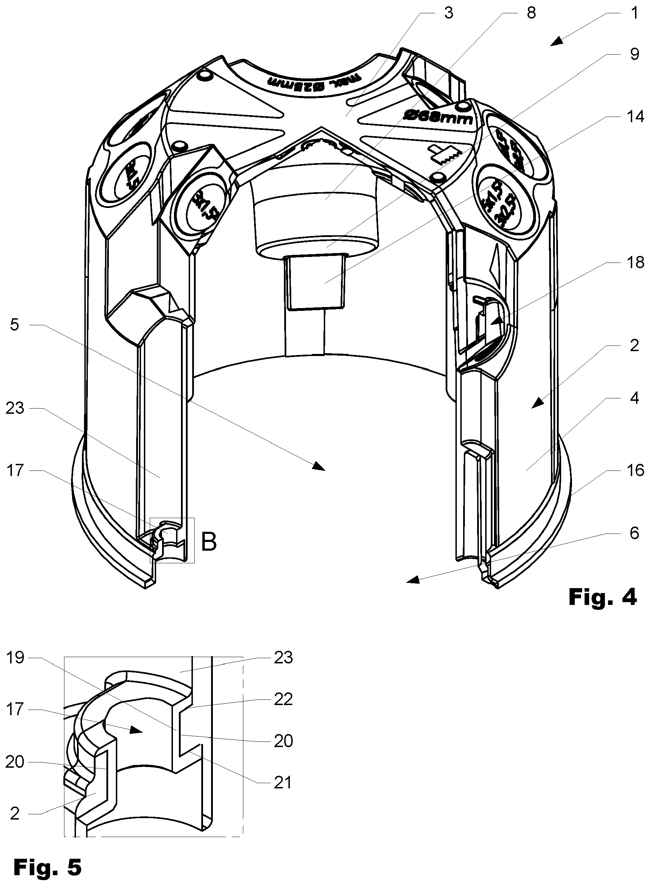

Um die Dichtigkeit weiter zu erhöhen, können weitere Öffnungen in den Installationsraum 5 ebenfalls fluidisch abgedichtet sein. Hierzu können beispielsweise die Befestigungsöffnung 17 für die Stellschraube zur Befestigung der Hohlwanddose 1 an einer Wandöffnung mit einer Dichtung versehen sein. Detail B aus **Figur 4** ist in **Figur 5** vergrössert dargestellt. Hier ist erkennbar, dass die Befestigungsöffnung 17 mit einer Schicht 19 aus weichelastischen Material versehen ist. Die Schicht 19 verläuft entlang der Innenfläche 20 der Befestigungsöffnung 17 sowie entlang einer vorderseitigen Auflagefläche 21 für den Kopf der Stellschraube und einer rückseitige Anschlagsfläche 22 für eine Befestigungslasche, welche auf der Stellschraube angebracht ist.

Eine gleiche Ausgestaltung kann für eine Adapteröffnung 18 in der Dosenwand 4 des Dosenkörpers 2 angewandt werden, welche ebenfalls in **Figur 4** erkennbar ist. Die Adapteröffnung 18 dient zum Einführen eines Adapters (nicht gezeigt) für das Verbinden der Hohlwanddose 1 mit einer weiteren Hohlwanddose. Hierbei kann die Adapteröffnung 18 (äquivalent zur Befestigungsöffnung 17) ebenfalls zumindest entlang einer Innenfläche der Adapteröffnung 18 eine Schicht 19 aus dem weichelastischen Material aufweisen um diese Adapteröffnung 18 fluidisch dicht zu gestalten.

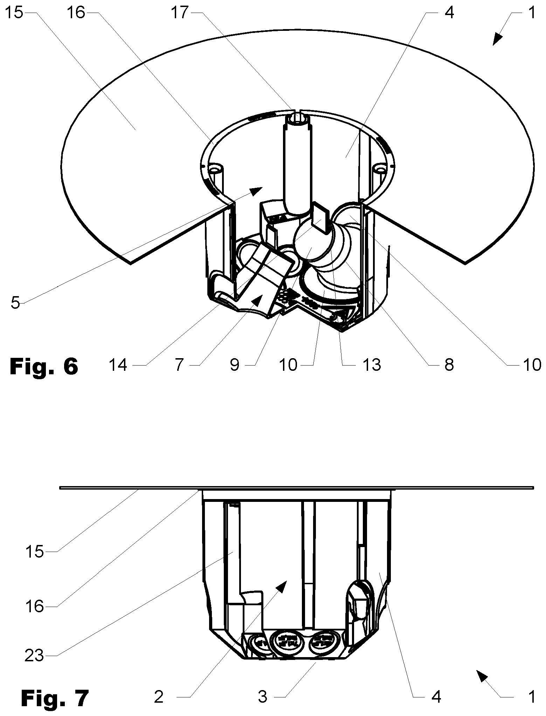

**Figur 6** und **Figur 7** zeigen eine weitere Variation der Hohlwanddose 1 gemäss der Erfindung. Diese zweite Variation umfasst ebenfalls einen Dosenkörper 2 aufweisend einen Dosenboden 3 und eine in diesen übergehende Dosenwand 4, welche einen Installationsraum 5 umgeben, der durch eine dem Dosenboden 3 gegenüberliegende Installationsöffnung 6 zugänglich ist. Im gezeigten Fall umfasst der Installationsraum 5 ein Kompartiment für eine Elektroinstallation (nicht gezeigt).

Zudem weist die erfindungsgemässe Hohlwanddose 1 einen von dem Dosenkörper 2 seitlich abragenden und die Installationsöffnung 6 umgebenen Kragen 15 auf, der zumindest bereichsweise aus einem weichelastischen Material besteht. Zudem umfasst die Hohlwanddose 1 noch einen von der Dosenwand 4 seitlich abstehenden Rand 16 zur Auflage an einer Oberfläche der Hohlwand, wobei der Rand 16 ein gleiches Material wie der Dosenkörper 2 umfasst. Hierbei erstreckt sich der Kragen 15 in radialer Richtung von der Dosenwand 4 entlang einer Rückseite des Rades 16 bis zu einem äusseren Kragenrand. Der Kragen 15 weist vorzugsweise eine von der Dosenwand 4 bis zum äusseren Kragenrand in die radiale Richtung gemessene Kragenbreite von mindestens 75%, insbesondere mindestens 90% des Durchmessers der Installationsöffnung 6, respektive des Kompartiments auf.

Je nach Ausgestaltung kann die Hohlwanddose 1 der zweiten Variante der Erfindung ein oder mehrere Dosenöffnungen und diese jeweils verschliessende Membrane 7 aus weichelastischem Material aufweisen, wie im Kontext der ersten Variante der Hohlwanddose 1 beschrieben. Jedoch sind auch andersartige Ausgestaltungen zur Einführung von Installationsrohren in die Hohlwanddose 1 denkbar.

### LISTE DER BEZUGSZEICHEN

| | | | |
|---|---|---|---|
| 1 | Hohlwanddose | 17 | Befestigungsöffnung |
| 2 | Dosenkörper | 18 | Adapteröffnung |
| 3 | Dosenboden | 19 | (Weichelastische) Schicht |
| 4 | Dosenwand | 20 | Innenfläche |
| 5 | Installationsraum | 21 | Auflagefläche |
| 6 | Installationsöffnung | 22 | Anschlagsfläche |
| 7 | Membran | 23 | Führungskanal |
| 8 | Manschette | | |
| 9 | Innere Zone | L | Längsrichtung |
| 10 | Äussere Zone | M | Mittelachse |
| 11 | Proximales Ende | A | Abstand |
| 12 | Distales Ende | D | Durchmesser |
| 13 | Dünnstelle | | |
| 14 | Abreisslasche | | |
| 15 | Kragen | | |
| 16 | Rand | | |

## Patentansprüche

1. Hohlwanddose (1) für elektrotechnische Zwecke umfassend
a. einen Dosenkörper (2) aufweisend einen Dosenboden (3) und eine in diesen übergehende Dosenwand (4), welche einen Installationsraum (5) umgeben, der durch eine dem Dosenboden (3) gegenüberliegende Installationsöffnung (6) zugänglich ist; wobei
b. der Dosenkörper (2) mindestens eine Dosenöffnung umfasst, welche durch eine Membran (7) aus weichelastischem Material verschlossen ist; und
c. die Membran (7) eine röhrenförmige Manschette (8) umfasst, welche
i. sich in eine Längsrichtung (L) der Manschette (8) von einem proximalen Ende (11) zu einem distalen Ende (12) erstreckt und
ii. eine zumindest bereichsweise heraustrennbare innere Zone (9) der Membran (7) umgibt.

2. Hohlwanddose (1) gemäss Anspruch 1, **dadurch gekennzeichnet, dass** die Manschette (8) von einer ersten Position, in der die Manschette (8) in dem Installationsraum (5) angeordnet ist, in eine zweite Position, in der die Manschette (8) vom Dosenkörper (2) nach aussen abragt, umstülpbar ist.

3. Hohlwanddose (1) gemäss Anspruch 2, **dadurch gekennzeichnet, dass** die erste und/oder die zweite Position der Manschette (8) eigenstabil ist.

4. Hohlwanddose (1) gemäss einem der vorangehenden Ansprüche, **dadurch gekennzeichnet, dass** die Manschette (8) eine in die Längsrichtung (L) gemessene Länge A und einen minimalen Durchmesser D aufweist, wobei das Verhältnis von A/D 1,5 bis 2 ist.

5. Hohlwanddose (1) gemäss einem der vorangehenden Ansprüche, **dadurch gekennzeichnet, dass** sich ein Querschnitt der röhrenförmigen Manschette (8) in Längsrichtung (L) der Manschette (8) verringert.

6. Hohlwanddose (1) gemäss einem der vorangehenden Ansprüche, **dadurch gekennzeichnet, dass** eine Innenkontur der Manschette (8) zumindest bereichsweise konisch und/oder zumindest bereichsweise zylindrisch ausgestaltet ist.

7. Hohlwanddose (1) gemäss einem der vorangehenden Ansprüche, **dadurch gekennzeichnet, dass** die Manschette an dem proximalen Ende (11) in eine äussere Zone (10) der Membran (7) übergeht.

8. Hohlwanddose (1) gemäss einem der vorangehenden Ansprüche, **dadurch gekennzeichnet, dass** die innere Zone (9) an dem distalen Ende (12) der Manschette angeformt ist.

9. Hohlwanddose (1) gemäss einem der vorangehenden Ansprüche, **dadurch gekennzeichnet, dass** zumindest bereichsweise zwischen der Manschette (8) und der inneren Zone (9) eine Dünnstelle (13) angeordnet ist.

10. Hohlwanddose (1) gemäss einem der vorangehenden Ansprüche, **dadurch gekennzeichnet, dass** auf der inneren Zone (9) eine Abreisslasche (14) angeordnet ist.

11. Hohlwanddose (1) für elektrotechnische Zwecke umfassend
a. einen Dosenkörper (2) aufweisend einen Dosenboden (3) und eine in diesen übergehende Dosenwand (4), welche einen Installationsraum (5) umgeben, der durch eine dem Dosenboden (3) gegenüberliegende Installationsöffnung (6) zugänglich ist; und
b. einen von dem Dosenkörper (2) seitlich abragenden und die Installationsöffnung (6) umgebenen Kragen (15), der zumindest bereichsweise aus einem weichelastischen Material besteht.

12. Hohlwanddose (1) gemäss Anspruch 11, **dadurch gekennzeichnet, dass** der Dosenkörper (2) einen seitlich von der Dosenwand (4) abragenden Rand (16) zur Auflage an einer Oberfläche einer Hohlwand umfasst, wobei der Rand (16) ein gleiches Material wie der Dosenkörper umfasst.

13. Hohlwanddose (1) gemäss Anspruch 12, **dadurch gekennzeichnet, dass** sich der Kragen (15) in eine radiale Richtung zumindest bereichsweise entlang des Randes (16) erstreckt, insbesondere entlang einer Unterseite des Randes erstreckt, und an diesem angeformt ist.

14. Hohlwanddose (1) gemäss einem der Ansprüche 11 bis 13, **dadurch gekennzeichnet, dass** eine von der Dosenwand (4) in eine radiale Richtung gemessene Kragenbreite mindestens 75%, insbesondere mindestens 90% eines Durchmessers eines Kompartimentes des Installationsraumes (5) zum Aufnehmen von jeweils einer Elektroinstallation misst.

15. Hohlwanddose (1) gemäss einem der vorangehenden Ansprüche, **dadurch gekennzeichnet, dass** die Hohlwanddose (1) in der Dosenwand (4) eine Adapteröffnung (18) aufweist zum Einführen eines Adapters für das Verbinden der Hohlwanddose (1) mit einer weiteren Hohlwanddose, wobei eine Schicht (19) aus dem weichelastischen Material zumindest bereichsweise entlang einer Innenfläche (20) der Adapteröffnung (18) angebracht ist.

16. Hohlwanddose (1) gemäss einem der vorangehenden Ansprüche, **dadurch gekennzeichnet, dass** in dem Dosenkörper (2) eine Befestigungsöffnung (17) zum Durchführen einer Stellschraube für das Befestigen der Hohlwanddose (1) angeordnet ist, wobei die Befestigungsöffnung (17) entlang
a. einer Innenfläche (20) der Befestigungsöffnung (17) und/oder
b. einer Auflagefläche (21) für einen Kopf der Stellschraube und/oder
c. einer Anschlagsfläche (22) für eine auf der Stellschraube angeordnete Befestigungslasche
zumindest bereichsweise eine Schicht (19) aus dem weichelastischen Material aufweist.
